# EUROPEAN PATENT APPLICATION

(11) **EP 1 199 856 A2**
(43) Date of publication of application: **24.04.2002**
(21) Application number: 01308826.5
(22) Date of filing: 17.10.2001
(51) Int. Cl.: H04L 12/58

(54) **Electronic bulletin board**

(30) Priority: 19.10.2000 JP 2000319914
(71) Applicant: Kizna Corporation, Delaware 19801 (US)
(72) Inventor: Miyazawa, Yoichi, Kizna Corporation, Aizuwakamatsu-shi,Fukushima-ken 965-0873 (JP)
(74) Representative: Brown, Kenneth Richard

(57) **Abstract**

The present invention provides an electronic bulletin board. Communication between people having an appointment to meet (i.e., message sender and receiver) is possible by using a common electronic bulletin board placed at the meeting place, requiring no knowledge of the e-mail address of the other party. The present invention has a plurality of electronic bulletin boards and a central server which, upon receiving a request from a mobile information terminal to access any one of the plurality of electronic bulletin boards, sends access information to said mobile information terminal. The electronic bulletin board receives a message, converts it to an icon message, and displays the icon on a display portion. The central server receives, together with said access request, identification information for specifying the radio base station site used for communication by said mobile information terminal, retrieves a database based on said identification information and extracts the most preferred electronic bulletin board among said plurality of electronic bulletin boards, and transmits information on access to this electronic bulletin board to said mobile information terminal. The mobile information terminal access the electronic bulletin board based on this access information.

## Description

### Background of the Invention

### Field of the Invention

The present invention relates to an electronic bulletin board and bulletin board system, and particularly to an electronic bulletin board and bulletin board system using a client server computer system and/or portable information terminal and a server computer.

### Description of the Related Art

Electronic mail is being widely used to communicate messages, not only between computers but also between portable information terminals such as cellular phones and computers, and portable information terminals.

Electronic mail is very convenient in that it can be used irrespective of place and time, but it cannot be sent without knowing the e-mail address of the addressed party. For example, when making an appointment to meet someone at a fixed place, a message cannot be sent to the other person via e-mail if one does not know his/her address. In this case, conventionally a handwritten message was left on a blackboard or white board, i.e., a conventional bulletin board.

### Summary of the Invention

The present invention provides an electronic bulletin board, aimed at enabling communication between people who have made an appointment to meet (the sender and the receiver), via a common electronic bulletin board at the meeting place.

The electronic bulletin board according to the present invention comprises an icon message generating portion for receiving a message and generating an icon message; a bulletin board screen generating portion for placing the generated icon message at a designated location; a display portion for receiving the output from said bulletin board screen generating portion and displaying the bulletin board on the screen; and a transmitting/receiving portion for communicating with a mobile information terminal, wherein said icon message generating portion receives a message from said mobile information terminal and converts the message to an icon, receives a request for reading said icon message and restores said icon message, and transmits the restored message to said mobile information terminal.

The electronic bulletin board system according to the present system comprises a plurality of electronic bulletin boards; and a central server which, upon receiving a request from a mobile information terminal to access any one of the plurality of electronic bulletin boards, sends access information to said mobile information terminal, wherein said electronic bulletin board comprises an icon message generating portion for receiving a message and generating an icon message, a bulletin board screen generating portion for placing the generated icon message at a designated location, a display portion for receiving the output from said bulletin board screen generating portion and displaying the bulletin board on the screen, and a transmitting/receiving portion for communicating with a mobile information terminal, wherein said icon message generating portion receives a message from said mobile information terminal and converts the message to an icon, receives a request for reading said icon message and restores said icon message, and transmits the restored message to said mobile information terminal, said central server comprises a database for pre-storing the relationship between the locations of the plurality of electronic bulletin boards and the zones of a plurality of radio base station sites of said mobile information terminal, and said central server receives, together said access request, identification information for specifying the radio base station site used for communication by said mobile information terminal, retrieves said database based on said identification information and extracts the most preferred electronic bulletin board from among said plurality of electronic bulletin boards, and transmits access information on the extracted electronic bulletin board to said mobile information terminal.

The electronic bulletin board system according to the present invention comprises a plurality of electronic bulletin boards; and a central server which, upon receiving a request from a mobile information terminal to access any one of the plurality of electronic bulletin boards, sends access information to said mobile information terminal, wherein said electronic bulletin board comprises an icon message generating portion for receiving a message and generating an icon message, a bulletin board screen generating portion for placing the generated icon message at a designated location, a display portion for receiving the output from said bulletin board screen generating portion and displaying the bulletin board on the screen, and a transmitting/receiving portion for communicating with a mobile information terminal, wherein said icon message generating portion receives a message from said mobile information terminal and converts the message to an icon, receives a request for reading said icon message and restores said icon message, and transmits the restored message to said mobile information terminal, said central server comprises a database for pre-storing the relationship between the locations of the plurality of electronic bulletin boards and the zones of a plurality of radio base station sites of said mobile information terminal, and said central server receives, together said access request, identification information for specifying the radio base station site used for communication by said mobile information terminal, retrieves said database based on said identification information and extracts the most preferred electronic bullet in board from among said plurality of electronic bulletin boards, accesses the most preferred electronic bulletin board and acquires the restored message of said icon message, and transmits the restored message to said mobile information terminal.

### Brief Description of the Drawings

Fig. 1 is a block view of the electronic bulletin board system relating to an embodiment of the present invention;
Fig. 2 is an overall view of the electronic bulletin board system relating to an embodiment of the present invention;
Fig. 3 is a view explaining the procedure of using the electronic bulletin board system relating to an embodiment of the present invention;
Fig. 4 is a view explaining the procedure of accessing the electronic bulletin board system relating to an embodiment of the present invention;
Fig. 5 is a view explaining another procedure of using the electronic bulletin board system relating to an embodiment of the present invention;
Fig. 6 is a view explaining the communication procedure in the electronic bulletin board system relating to an embodiment of the present invention;
Fig. 7 is a flow chart showing the security management procedure of the electronic bulletin board system relating to an embodiment of the present invention;
Fig. 8 is a block view of the bulletin board server relating to an embodiment of the present invention; and
Fig. 9 is a flow chart of the security management procedure of the electronic bulletin board system relating to an embodiment of the present invention.

### Description of the Preferred Embodiments

The electronic bulletin board according to an embodiment of the present invention is structured using an icon-driven server/client system for sending and receiving messages in real time. Using this system, a message is addressed intuitively and directly by dragging and dropping an icon.

In the above explanation, an icon is not the message itself but a representation of a message, and contains information for specifying the sender and/or the receiver of the message, e.g., text information, initial, nickname, symbol or other information on the receiver and/or the sender. This information need not be understood by everyone, only at least by the receiver. The simplest icon would be a sign arranged between the receiver and sender. The icon may also contain additional information such as the receiver's name, the sender's name, the transmission time, password information, a portion of the message (headline), and a URL.

This system can be used in a very simple manner. The user merely accesses the server any time to use the electronic bulletin board.

This system is characterized by being easy to install, easy to use, and easy to customize. The system can be installed on a personal computer and also on a cellular phone or other mobile information terminal that can connect to the Internet.

To use this system, the server should be a CGI-supported Web server, and should support Java. The client should be a Java-supported Web browser, and should support the virtual machine/run-time environment of Java.

This system has the following major functions.

### Message creation function

This is a function to create a message to send to a destination. For example, if an icon for sending a message is clicked on, a dialog box is displayed on the screen, and the icon and the message are linked by writing the message in this dialog box. The dialog box may be displayed not only when the icon is clicked on but also when the icon is dragged and dropped.

### Message addressing function

This is a function to determine the destination of a message. In conventional electronic mail software, the destination should be input by characters. This function defines and manages an area on the screen corresponding to each client, and judges which area the icon is to be dragged and dropped onto, i.e., judges which destination the message is addressed to.

### Security function

This is a function to control access to an icon and/or message. This function grants permission to read, move, correct, or delete an icon and/or message. For example, a message of an icon placed in a public space can be read by anyone, but an icon placed in a private space can be read only by the specified party or parties.

Now, the embodiments of the present invention will be described in detail with reference to the drawings.

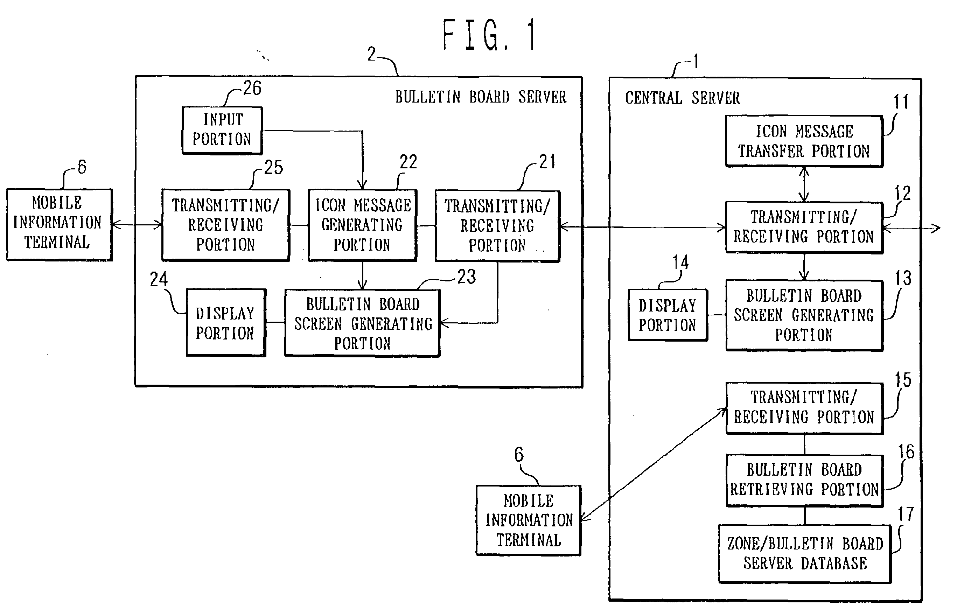

Fig. 1 is a functional block view showing the overall structure of a central server 1 and a bulletin board server 2 used in the present system. Central server 1 comprises a message transfer portion 11 for transferring the received message as necessary, a transmitting/receiving portion 12 for communicating with the bulletin board server, a bulletin board screen generating portion 13 for generating the bulletin board screen based on the received message, and a display portion 14 for displaying the screen upon receiving the output from screen generating portion 13. Display portion 14 is a normal display for personal computers or a large display module to be viewed by passers-by on the street. Central server 1 further comprises a transmitting/receiving portion 15 for communicating with a mobile information terminal, a bulletin board retrieving portion 16 for receiving an access request to the bulletin board server from the mobile information terminal and transmitting access information (e.g., the URL) on the most preferred bulletin board server within the communication zone of the mobile information terminal, and a zone/bulletin board server database 17 for storing the relation between the communication zone and the bulletin board server in advance.

Message board server 2 comprises a transmitting/receiving portion 21 for communicating with the central server, a message generating portion 22 for generating a transmission message, a bulletin board screen generating portion 23 for receiving the transmission message from message generating portion 22 and receiving the received message from transmitting/receiving portion 21 and displaying both messages on the bulletin board, and a display portion 24 for displaying a screen upon receiving the output from screen generating portion 23. Display portion 24 may be a large display module to be viewed by passers-by on the street. Message board server 2 further comprises a transmitting/receiving portion 25 for communicating with the mobile information terminal and an input portion 26 for receiving input of a message by a user. Message board server 2 receives the message from the mobile information terminal and/or input portion 26 and generates an icon, relates the message with the icon, and displays the icon on display portion 24. Message board server 2 exchanges messages with central server 1, so the contents of the bulletin board displayed on display portion 24 are equal to that of display portion 14.

It is also possible to provide the mobile information terminal with some of the functions of bulletin board server 2, for example the functions from transmitting/receiving portion 21 to input portion 26 with exception of transmitting/receiving portion 25. This structure enables display of a screen equal to that of the display screen provided by bulletin board server 2 on the mobile information terminal. In other words, a bulletin board can be displayed on the screen of the mobile information terminal.

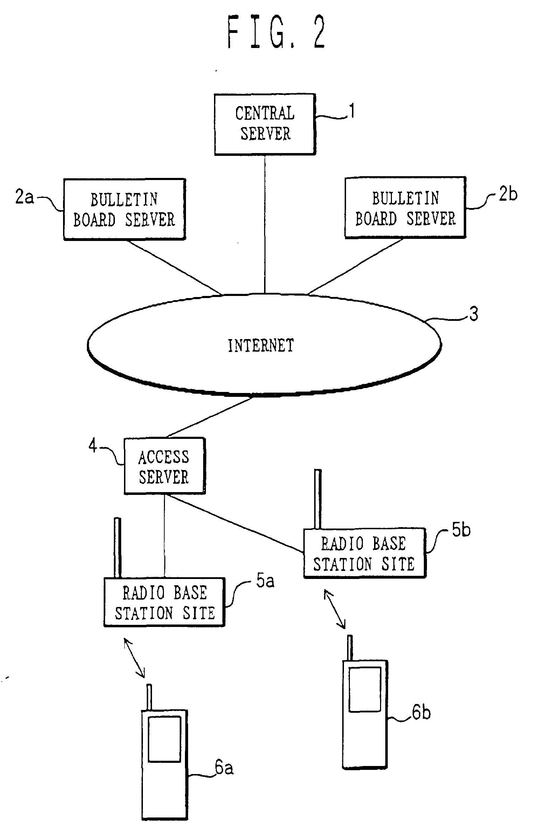

Fig. 2 is a conceptual view of the overall structure of the present system. Message board servers 2a, 2b can access central server 1 via the Internet/Intranet 3. Server 1 stores application software for this system (Java applet) in advance in external storage device 1a. When bulletin board server 2 or any other client accesses the server, application software for clients is downloaded to enable utilization of this system.

An access server 4 enabling mobile information terminals 6a, 6b to access the Internet is also connected to the Internet. Mobile information terminals 6a, 6b communicate with radio base station sites 5a, 5b to access bulletin board servers 2a, 2b and central server 1 via access server 4 and the Internet 3.

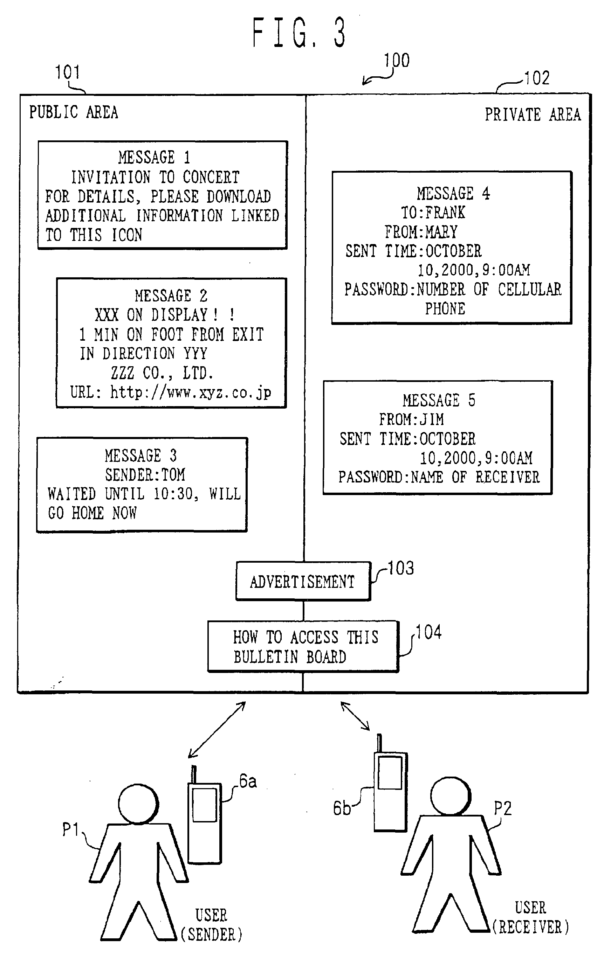

Fig. 3 is a view explaining the procedure of using the electronic bulletin board system relating to an embodiment of the present invention. Screen 100 provided by bulletin board server 2 contains a public area 101 and a private area 102. Public area 101 is an area for displaying messages addressed to the general public, and messages placed within this area can be read by anyone. Cases are distinguished where the message contents are displayed on screen 100, and where the existence of a message is displayed but not the contents, in which case the user downloads the message as necessary onto the mobile information terminal to display the message onto the screen of the own mobile information terminal. The second case is called an icon message, or simply, an icon. Private area 102 is an area displaying an icon message for a specific addressee, and the contents of the icon message placed within this area can be read only by the specified addressee. Furthermore, screen 100 also displays an advertisement 103 and a bulletin board access method 104. As an example of access method 104, the URL of central server 1 may be displayed.

The user of bulletin board 100 must first prepare a message and transmit it to bulletin board server 2. At this time, the user also selects either public area 101 or private area 102 to place the message. When placing a message in private area 102, identification information for specifying the receiver and authentication information are transmitted together with the message to bulletin board server 2. The identification information and authentication information may be, for example, the number of the addressee's cellular phone or the name of the receiver. Both identification and authentication information are displayed together with the message.

In Fig. 3, a user (sender) P1 transmits a message 3. Message 3 in Fig. 3 is displayed in public area 101 and the contents are also displayed. The person P2 addressed by user P1 can read the message without any special operation. In this way, public area 101 can also be used for communication of private messages. Public area 101 is for displaying a message intended for the general public. In contrast, private area 102 is for communicating a message only to a specific person by using the security function of this area.

In Fig. 3, user (sender) P1 transmits a message 4. An icon of message 4 in Fig. 3 is displayed in private area 102, and the contents are not displayed. Person P2 addressed by user P1 accesses bulletin board server 2 from cellular phone 6b, designates message 4 and downloads the data. A password is requested as the authentication information. Addressee P2 can read the message with his/her own cellular phone 6b. The same applies to message 5, but message 5 does not include the addressee. It is left to the user whether or not to receive the message. Anyone who thinks he/she is the intended addressee inputs his/her own name as the password. If the person was intended by the sender to receive the message, the person can read message 5.

In addition to the message communication from a specific sender to a specific receiver, message communication to the general public is also possible. Public area 101 is used for this purpose. If the message is a simple one, the user can read it without any operation. If the message is long, it is difficult to display all of it due to limited display area space. Therefore, desirably only the title and outline are displayed as an icon message, and interested people will access the icon message and download the additional information to his/her own cellular phone.

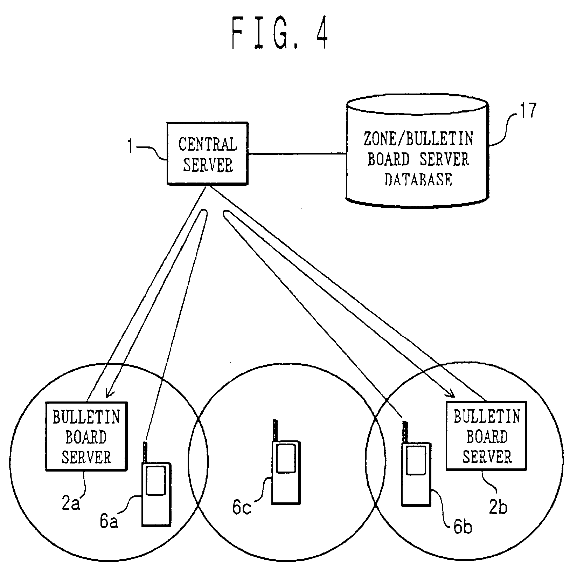

Fig. 4 is a view explaining the procedure of accessing the electronic bulletin board system relating to an embodiment of the present invention. This electronic bulletin board is placed on the street. The user (receiver) confirms the displayed bulletin board on the site and downloads the necessary message. To do so, the user is required to access bulletin board server 2a. One way is to directly type the address and another is to automatically access themost preferred bulletin board according to the zone of the user's cellular phone. The second access method will be described in detail below. The area (zone) covered by the radio base station site of the cellular phone has a certain size. If one electronic bulletin board is located in one zone, one zone corresponds to one bulletin board. This relationship is stored in advance in a database 17, and when a cellular phone makes an access request for an electronic bulletin board, central server 1 selects the most preferred electronic bulletin board (the one which is before the user) according to the zone of the cellular phone (i.e., the identification number of the radio base station site), and gives the address to the cellular phone. By accessing the electronic bulletin board based on this address, the cellular phone can download data from the most preferred electronic bulletin board. In the example in Fig. 4, cellular phone 6a first accesses central server 1. Then, it accesses bulletin board server 2a within the same zone using the address or instruction from central server 1. Similarly, cellular phone 6b accesses bulletin board server 2b in the same zone. However, cellular phone 6c can access neither of the bulletin board servers 2a, 2b because there is no bulletin board server in the same zone.

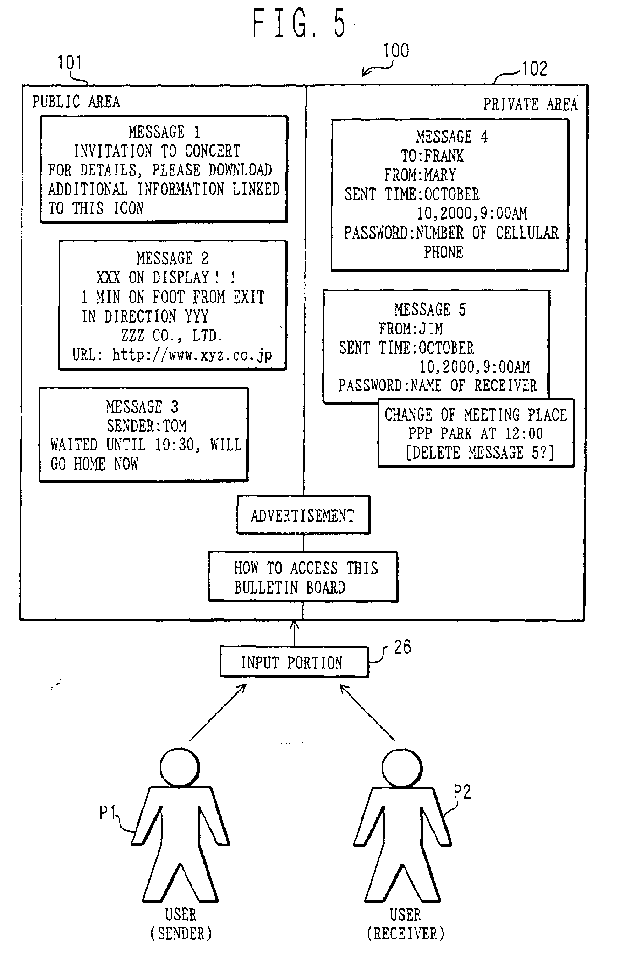

Fig. 5 is a view explaining another procedure of using the electronic bulletin board system relating to an embodiment of the present invention. In Fig. 3, the cellular phone was used to leave or download messages. In Fig. 5, input portion 26 of the electronic bulletin board was used to generate, write and read messages. When a message is read, the message contents are displayed on display portion 24 (cf. example of message 5 in Fig. 5). Furthermore, in addition to display portion 24, a small display portion may be provided in the vicinity of input portion 26 to display the message contents. Thereby, it is possible to convey the message contents only to the user.

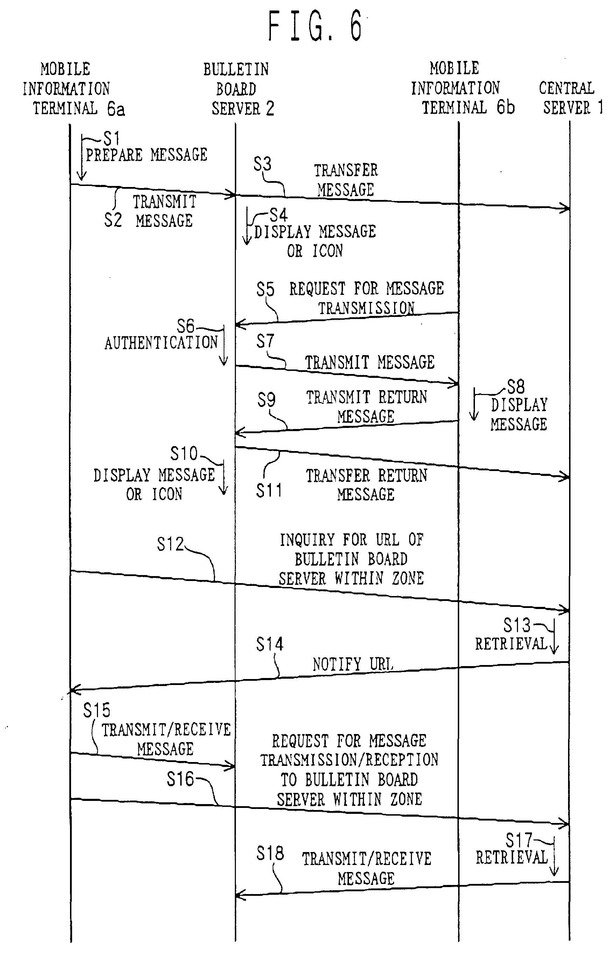

Fig. 6 outlines the message exchange between servers 1,2 and mobile information terminals a, b. A message is prepared by mobile information terminal 6a (S1). The message is transmitted to bulletin board server 2 (S2). Message board server 2 displays the received message as is or converted into an icon message (S4). At the same time, bulletin board server 2 transmits the received message to central server 1.

When the receiver desires to download a message onto mobile information terminal 6b, a message transmission request is first sent from mobile information terminal 6b to bulletin board sever 2 (S5). Message board server 2 authenticates such request (S6). Authentication is done by collation with a pre-input password, telephone number of the cellular phone, name, etc. If the user is an authorized user, bulletin board server 2 transmits the message to mobile information terminal 6b (S7). Mobile information terminal 6b displays the message (S8). If the receiver returns a message, mobile information terminal 6b transmits a return message to bulletin board server 2 (S9). The return message is displayed on the bulletin board (S10) and at the same time transferred to central server 1 (S11).

Processing steps S1 to S4 and S5 to S11 are executed after mobile information terminals 6a, 6b have established access to bulletin board server 2. Now, the process of establishing access will be described below. Mobile information terminal 6a makes an inquiry to central server 1 for the URL of bulletin board server 2 within the zone (S12). As there is normally one central server 1, the user always accesses the same URL at S12 irrespective of which bulletin board the user is standing before. The URL of central server 1 is preset. It can also be acquired from a search engine. Upon receiving the inquiry for the URL, central server 1 retrieves the bulletin board server 2 within the zone of mobile information terminal 6a (S13). During the inquiry in S12, the service company of the mobile information terminal (cellular phone) transmits, together with the user's request, the identification number of the radio base station site which the mobile information terminal is currently communicating with. Central server 1 extracts bulletin board server 2 within the zone of such radio base station site using such identification number as the retrieval key, and acquires the URL of such server. Normally, one bulletin board server 2 exists within a zone. If there is a plurality of bulletin board servers 2 within a zone, one is selected. In such case, the plurality of bulletin board servers 2 are desirably linked to each other. For example, the plurality of bulletin board servers 2 exchange messages among each other and all of them display the same message. In this way, the user can achieve his/her goal by accessing any of the bulletin board servers 2 within the same zone. The retrieved URL is transmitted to the requesting mobile information terminal 6a (S14). Based on the received URL, mobile information terminal 6a accesses bulletin board server 2 (S15).

In steps S12 to S14, mobile information terminal 6a directly accessed bulletin board server 2 based on the URL from central server 1. However, mobile information terminal 6a may indirectly access bulletin board server 2 via central server 1. This process is shown in steps S16 to S18. A request to access a bulletin board server within the zone is transmitted from mobile information terminal 6a to central server 1 (S16). Central server 1 retrieves the most preferred bulletin board server 2 (S17), accesses such server and transmits or receives a message (S18). When receiving a message, the received message is sent from central server 1 to mobile information terminal 6a. In this process, central server 1 functions quasi as a proxy server.

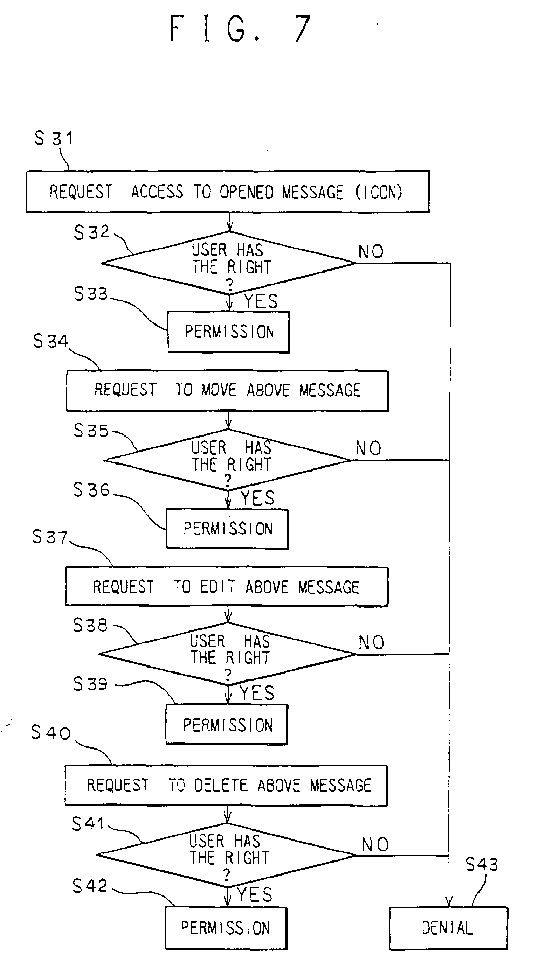

Fig. 7 shows the flow of the security processing by the server. When there is an access request for an unfolded message (icon) (S31), it is checked whether the requesting user is an authorized user (S32), and if yes, the user is permitted access (S33), and if no, the user is denied access (S43). The same process is conducted upon a request to move a message (change the receiver's address), edit a message and delete a message (S34 to S42). For example, if the system is a public bulletin board that can be accessed by anyone, anyone is permitted to access and move a message. However, editing and deleting is permitted only to the message sender or the administrator. In the case of a private bulletin board, access, movement, editing and deleting is permitted only to the message sender and receiver and the administrator. It is also possible to allow the message receiver to access but not to move, edit or delete the message.

Now, the method of operating this system will be described below. When sending a message, the message creation icon is clicked to create a message. Then the message creation icon is dragged and dropped to an arbitrary location on the bulletin board. Then the message is unfolded and can be read. The present system differs from the conventional broadcasting of messages in that no destination is designated and a message can be sent to all users who are participating. Furthermore, as an icon is used for operation, the system is intuitive and easy to understand, and very easy to use.

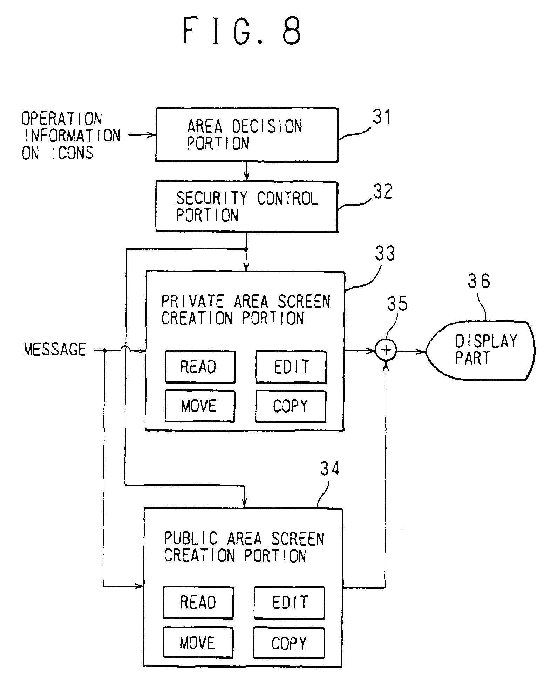

Fig. 8 is a functional block view of a portion of bulletin board server 23 that relates to bulletin board screen generating portion 23. A private area screen creation portion 33 creates the screen of private area 102. Private area screen creation portion 33 has icon reading, editing, moving and copying functions. These functions are executed according to permission from the security management portion 32. On the other hand, a public area screen creation portion 34 generates the screen of public area 101. In this area, the user can freely operate any of the icons. Operation information relating to an icon is input in area determination portion 31, where it is determined in which area the icon has been operated. Based on the determination result, security management portion 32 decides whether to permit the operation of such icon or not. The output is sent to private area screen creation portion 33. When security management is necessary in the public area, the above output is also sent to public area screen creation portion 34. The outputs of screen creation portions 33, 34 are synthesized at synthesizing portion 35 and displayed on display portion 36.

In the present system, when sending a message to a destination, the user drags his/her icon to either private area 102 or public area 101. Regarding an icon in private area 102, only the legitimate receiver can read the message. No other user can read, move or delete this message. On the other hand, public area 102 is targeted at all users, and a message placed within this area can be read, moved or deleted by anyone. It is possible to enable only the administrator to move and delete a message as with the bulletin board in order to reinforce the security function. In the case of an urgent message, it is possible to drag an urgency icon onto the bulletin board. In this case, it is possible to display not the icon but the message itself.

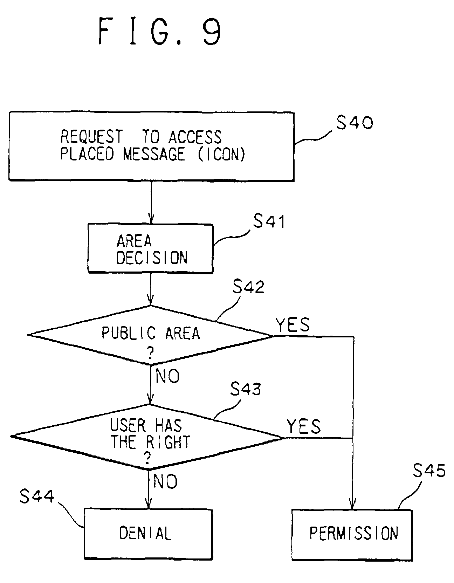

Fig. 9 is a flow chart relating to security. When there is a request to access a posted message (icon), area determination is conducted (S41). If the determined area is the public area, access is permitted (S45). If not, it is checked whether the user is authorized (S43), and if yes, access is permitted (S45), and if not, access is denied.

According to the present system, a message is converted to an icon, and a message can be sent by dragging and dropping an icon, so an interface which is very easily understood can be provided. Also, security control is easy and clearer for the user because it is based on the screen area. Users who are not the receiver cannot read the message, but can know the existence of an icon, so a non-receiver user can know which users are exchanging messages.

The electronic bulletin board according to the present invention is set up, for example, by setting up a large display at a place where people gather. The user can leave an electronic message upon this display. The device is an alternative for the conventional blackboard used as a bulletin board used by the public. The device is set up for example in a railroad station, restaurant, a frequently used meeting place, etc.

The user can write a message on the electronic bulletin board by using input means such as a mobile information terminal (e.g., a cellular phone) and a keyboard provided on the electronic bulletin board. The written message is deleted by the person reading the message after finishing reading, or the administrator of the device after a predetermined period of time has passed. An advertisement is displayed on the electronic bulletin board. The device may be run by the advertisement rates, or the user may be limited to members and the device may be run based on the membership fees.

The electronic bulletin board is preferably connected to a server. The server is connected to the Internet, enabling people at any place to check what kinds of messages exist on a specific bulletin board via the Internet. Furthermore, a plurality of bulletin boards can mutually exchange messages via the Internet. For example, a plurality of bulletin boards can be made to operate together. It is possible to display the contents of a plurality of bulletin boards at different locations on one screen one by one or at the same time using a divided screen.

The present invention is not limited to the above embodiments; possible variations within the scope of the claims are covered by the claims.

Furthermore, means as used herein does not necessarily mean physical means, but includes cases where the function of the means is realized through software. The function of a single means may be realized through two or more physical means, and vice versa.

## Claims

1. An electronic bulletin board comprising:
an icon message generating portion for receiving a message and generating an icon message;
a bulletin board screen generating portion for placing the generated icon message at a designated location;
a display portion for receiving the output from said bulletin board screen generating portion and displaying the bulletin board on the screen; and
a transmitting/receiving portion for communicating with a mobile information terminal,
wherein said icon message generating portion receives a message from said mobile information terminal and converts the message to an icon, receives a request for reading said icon message and restores said icon message, and transmits the restored message to said mobile information terminal.

2. An electronic bulletin board according to claim 1, further comprising an input portion for inputting a message to be posted on the bulletin board, and inputting a request for reading said icon message.

3. An electronic bulletin board according to claim 1, wherein said icon message generating portion generates said icon message that includes at least one of text information on, the initials, a nickname and a symbol of the receiver and/or the sender of the message, and stores said message in relation with said icon message,
said bulletin board screen generating portion executes processing for displaying said icon message on the screen, and, upon receiving a request for reading said icon message, said icon message generating portion outputs said message related to said icon message.

4. An electronic bulletin board according to claim 3, wherein said icon message generating portion generates said icon message that includes additional information containing at least one of the receiver's name, the sender's name, the transmission time, password information, the message headline, and the URL.

5. An electronic bulletin board according to claim 1, wherein said bulletin board screen generating portion comprises:
a private area screen preparation portion for preparing a private area screen accessible only to specified persons;
a public area screen preparation portion for preparing a public area screen generally accessible to all users;
an area determination portion for receiving operational information relating to said icon mess age and determining whether the operation was done in said private area screen or said public area screen; and
a security management portion for permitting access to said icon message based on the determination result of said area determination portion.

6. An electronic bulletin board according to claim 5, wherein said icon message can be moved within said private area screen and/or public area screen, or between these screens, by a drag-and-drop operation, and, when said icon message crosses the boundary between said private area screen and said public area screen, the security level changes.

7. An electronic bulletin board according to claim 6, wherein said icon message is prepared in advance on an icon bar within the display screen, and can be placed within an arbitrary area by a drag-and-drop operation from said icon bar.

8. An electronic bulletin board system comprising:
a plurality of electronic bulletin boards; and
a central server which, upon receiving a request from a mobile information terminal to access any one of the plurality of electronic bulletin boards, sends access information to said mobile information terminal,
wherein said electronic bulletin board comprises an icon mes sage generating portion for receiving a message and generating an icon message, a bulletin board screen generating portion for placing the generated icon message at a designated location, a display portion for receiving the output from said bulletin board screen generating portion and displaying the bulletin board on the screen, and a transmitting/receiving portion for communicating with a mobile information terminal, wherein said icon message generating portion receives a message from said mobile information terminal and converts the message to an icon, receives a request for reading said icon message and restores said icon message, and transmits the restored message to said mobile information terminal,
said central server comprises a database for pre-storing the relationship between the locations of the plurality of electronic bulletin boards and the zones of a plurality of radio base station sites of said mobile information terminal, and said central server receives, together said access request, identification information for specifying the radio base station site used for communication by said mobile information terminal, retrieves said database based on said identification information and extracts the most preferred electronic bulletin board from among said plurality of electronic bulletin boards, and transmits access information on the extracted electronic bulletin board to said mobile information terminal.

9. An electronic bulletin board system according to claim 8, wherein said central server receives icon messages from said plurality of electronic bulletin boards, and unfolds the icon messages on its own bulletin board.

10. An electronic bulletin board system according to claim 9, wherein said central server manages icon messages classified by each of said plurality of electronic bulletin boards and transmits a portion or all of said icon messages to a portion or all of said plurality of electronic bulletin boards upon request.

11. An electronic bulletin board system comprising:
a plurality of electronic bulletin boards; and
a central server which, upon receiving a request from a mobile information terminal to access any one of the plurality of electronic bulletin boards, sends access information to said mobile information terminal,
wherein said electronic bulletin board comprises an icon message generating portion for receiving a message and generating an icon message, a bulletin board screen generating portion for placing the generated icon message at a designated location, a display portion for receiving the output from said bulletin board screen generating portion and displaying the bulletin board on the screen, and a transmitting/receiving portion for communicating with a mobile information terminal, wherein said icon message generating portion receives a message from said mobile information terminal and converts the message to an icon, receives a request for reading said icon message and restores
said icon message, and transmits the restored message to said mobile information terminal, said central server comprises a database for pre-storing the relationship between the locations of the plurality of electronic bulletin boards and the zones of a plurality of radio base station sites of said mobile information terminal, and said central server receives, together said access request, identification information for specifying the radio base station site used for communication by said mobile information terminal, retrieves said database based on said identification information and extracts the most preferred electronic bulletin board from among said plurality of electronic bulletin boards, accesses the most preferred electronic bulletin board and acquires the restored message of said iconmessage, and transmits the restored message to said mobile information terminal.

12. An electronic bulletin board system according to claim 11, wherein said central server receives icon messages from said plurality of electronic bulletin boards, unfolds the icon messages on its own bulletin board, and, upon receiving a request from said mobile information terminal to access any one of said plurality of electronic bulletin boards, accesses its own bulleting board instead of directly accessing said extracted most preferred electronic bulletin board.

13. An electronic bulletin board having a display screen, display control means for controlling the display screen to display message information enabling message retrieval from the board, and data communication means permitting a message to be received by the board from a mobile information terminal via an information communication network and the message or an indication of its said receipt to be displayed as said message information.
